# EUROPÄISCHE PATENTSCHRIFT

(11) **EP 2 274 128 B1**
(45) Veröffentlichungstag und Bekanntmachung des Hinweises auf die Patenterteilung: **16.05.2012**
(21) Anmeldenummer: 09728242.0
(22) Anmeldetag: 06.03.2009
(51) Int. Cl.: B23C 5/20

(54) **SCHNEIDWERKZEUG FÜR SPANENDE BEARBEITUNG VON WERKSTÜCKEN, SOWIE HALTER FÜR EIN SCHNEIDEINSATZ**
CUTTING TOOL FOR MACHINING WORKPIECES, AND HOLDER FOR A CUTTING INSERT
OUTIL DE COUPE POUR L'USINAGE PAR ENLÈVEMENT DE COPEAUX DE PIÈCES D'OEUVRE AINSI QU'ÉLÉMENT DE RETENUE POUR UNE PLAQUETTE DE COUPE

(30) Priorität: 31.03.2008 DE 102008016732
(43) Veröffentlichungstag der Anmeldung: 19.01.2011
(73) Patentinhaber: Hartmetall-Werkzeugfabrik Paul Horn GmbH, 72072 Tübingen (DE)
(72) Erfinder: LUIK, Matthias, 72766 Reutlingen (DE)
(74) Vertreter: Witte, Weller & Partner
(86) Internationale Anmeldenummer: PCT/EP2009/001579
(87) Internationale Veröffentlichungsnummer: WO 2009/121459

(56) Entgegenhaltungen:
- EP-A- 0 925 863
- EP-A1- 1 736 266
- WO-A1-95/25618
- JP-A- 59 196 107
- Hartmetall-Werkzeugfabrik Paul Horn GmbH: "PDF Hartmetall-Fräswerkzeuge Kataloge - System DA (Neue Fräsgeneration)" Bd. Kapitel J der Gesamtkataloge, 26. Januar 2009 (2009-01-26), XP002530299 Deutschland Gefunden im Internet: URL:http://www.phorn.de/fileadmin/user_upl oad/de/PDF/PDF_FraesKatalog_de_en/KapitelH .pdf> [gefunden am 2009-05-29]

## Beschreibung

Die Erfindung betrifft ein Schneidwerkzeug gemäß dem Obebegriff des Anspruchs 1 für spanende Bearbeitung von Werkstücken, mit einem Schneideinsatz und einem Halter mit einem Sitz zur Aufnahme des Schneideinsatzes. Ferner betrifft die Erfindung einen entsprechenden Halter gemäß dem Oberbegriff des Anspruchs 1.

Aus der EP 1736266 A1 ist ein solches Schneidwerkzeug sowie ein solcher Halter bekannt. Insbesondere ist darin ein Schneideinsatz beschrieben mit mindestens einer Schneidkante, die in einem schrägen Kantenverlauf in einer Spitze des Schneideinsatzes ausmündet, der von seinem Bodenteil ausgehend in Richtung einer Begrenzungslinie zur Spitze hin konvex gekrümmt ausgebildet ist, wobei der schräge Kantenverlauf in einer Ebene geradlinig ausgebildet ist und der Schneideinsatz unterhalb der Schneidkante in Richtung seines Bodenteils über eine vorgebbare Wegstrecke ein konvex gekrümmtes Wandteil aufweist, längs dessen Krümmung die Schneidkante in einer weiteren Ebene nachfolgt.

Das bekannte Schneidwerkzeug ist als Eckfräser zum Fräsen von 90° Ecken oder Schultern ausgestaltet, wobei der Schneideinsatz als Wendeschneidplatte mit sechs Schneidkanten, wobei zwei benachbarte (geringfügig unterschiedliche) Schneidkanten jeweils ein Schneidkantenpaar bilden, ausgebildet ist. Der Schneideinsatz sitzt in einem Plattensitz im Halter. Die Abstützung des Schneideinsatzes ist dabei auf eine derartige Anwendung ausgelegt.

Der vorliegenden Erfindung liegt die Aufgabe zugrunde, ein Schneidwerkzeug und einen entsprechenden Halter zu schaffen, die auch zum Herstellen von anderen Fasenwinkeln oder Schultern (als 90°) geeignet sind und auch bei diesen anderen Anwendungen eine optimale Abstützung des Schneideinsatzes gewährleisten.

Diese Aufgabe wird erfindungsgemäß durch ein in Anspruch 1 definiertes Schneidwerkzeug und durch einen in Anspruch 13 definierten entsprechenden Halter gelöst, bei den
- der Schneideinsatz mindestens eine Schneidkante aufweist, die relativ zu einer Bodenfläche des Schneideinsatzes schräg und entlang einer der Bodenfläche gegenüber liegenden Deckfläche verläuft und in einer Spitze des Schneideinsatzes ausmündet,
- der Schneideinsatz an einer der Schneidkante gegenüber liegenden, zwischen Bodenfläche und Deckfläche verlaufenden Seite zwei unter einem Anlagewinkel zueinander verlaufende Anlageflächen aufweist, an die sich jeweils eine Wandfläche anschließt, die unter einem Außenwinkel zu der angrenzenden Anlagefläche verläuft, der größer ist als Anlagewinkel,
- der Sitz in dem Halter eine Bodenabstützfläche zur Abstützung der Bodenfläche des Schneideinsatzes und zwei quer zur Bodenabstützfläche und unter einem Abstützwinkel verlaufende Abstützflächen zur Abstützung der Anlageflächen des Schneideinsatzes aufweist,
- der Anlagewinkel dem Abstützwinkel entspricht, und
- die Abstützflächen so ausgebildet und angeordnet sind, dass sie die unter dem Anlagewinkel zueinander verlaufenden Anlageflächen abstützen, dass die beim Einsatz des Schneidwerkzeugs auf die mindestens eine Schneidkante einwirkende Schneidkraft im Wesentlichen in Richtung auf die Schnittlinie der Abstützflächen verläuft, und dass die Schnittlinie der Abstützflächen in einem Abstand von einer zentralen Werkzeugachse beabstandet ist, der kleiner ist als der Abstand der übrigen Teilen der Abstützflächen von der zentralen Werkzeugachse.

Der Erfindung liegt der Gedanke zugrunde, die Abstützflächen in dem Halter derart anzuordnen, dass einerseits eine optimale Abstützung des Schneideinsatzes über entsprechende Anlageflächen gewährleistet wird, indem die Abstützflächen so angeordnet sind, dass der Schneideinsatz bei Krafteinwirkung gegen die Abstützflächen gedrückt wird. Auch Querkraftkomponenten führen nicht zu einer Verkippung des Schneideinsatzes, sondern drücken ebenfalls den Schneideinsatz gegen die Abstützflächen. Ferner wird auch ein Verdrehen des Schneideinsatzes im Einsatz wirksam verhindert. Dadurch werden die Lebensdauer des Schneideinsatzes und des Plattensitzes sowie die Herstellungsgenauigkeit erhöht.

Durch Wahl der Anordnung der Abstützflächen kann ferner bestimmt werden, für welchen Einsatz, insbesondere welchen Fasenwinkel bzw. welche Schulter, das Schneidwerkzeug eingesetzt werden kann. So kann beispielsweise der Halter, insbesondere der Plattensitz im Halter bzw. deren Abstützflächen, so angeordnet sein, dass ein bekannter Schneideinsatz so eingesetzt werden kann, dass das Schneidwerkzeug als Tauchfräser oder Taschenfräser einsetzbar ist und einen Fräswinkel von 45° (oder von anderer wählbarer Größe) herstellen kann.

Es sei angemerkt, dass mit dem Ausdruck "quer" nicht notwendigerweise ein Winkel von 90° gemeint ist, sondern Winkel in einem Bereich von mindestens ±30° um 90° herum mit eingeschlossen sein sollen. Bevorzugt sind die Abstützflächen jedoch in einem Winkel von etwa 90° (±5°) zur Bodenabstützfläche angeordnet, was jedoch auch von der konkreten Ausgestaltung des Schneideinsatzes abhängt.

Bevorzugte Weiterbildungen sind in den Unteransprüchen angegeben.

In einer Weiterbildung ergeben sich durch gekrümmte Wandteilflächen des Schneideinsatzes, die insbesondere durch einen Bogenschliff erhalten werden können, sehr stabile Verhältnisse für die Schneidkante, die insoweit der konvexen Krümmung des Wandteils nachfolgt. Ferner ergibt sich durch die konvexe Krümmung für die jeweilige Schneidkante eine Art Drallwinkel mit sich hieraus ergebenden verbesserten Schnittbedingungen.

Da der schräge Kantenverlauf bevorzugt in der einen Ebene geradlinig ausgebildet ist, ist insoweit der Schneideinsatz einfach und kostengünstig herstellbar. Durch den angesprochenen schrägen und geradlinigen Kantenverlauf quer zur balligen Anordnung der Schneidkante über die konvexe Wölbung ist eine Art positiv vorauseilende Schneide gebildet, was wiederum die Zerspanbedingungen verbessert. Ferner ergibt sich hierdurch die Möglichkeit, durch die positiv vorauseilende Schneidengeometrie den Schneideinsatz bei Umfangsfräsern zum Einsatz zu bringen, die dann zum Durchführen eines Tauchfräsverfahrens in beliebig vorgebbaren Schrägwinkeln in das zu bearbeitende Werkstück eintauchen können.

Darüber hinaus sind mit dem Schneideinsatz weitere Bearbeitungsfälle abzudecken, wie Planfräsen, Taschenfräsen, Aufweiten und dergleichen mehr. Im Werkzeugformenbau stellt das Verfahren "Fräsen" zwischenzeitlich das überwiegend eingesetzte Verfahren dar. Um demgemäß Bearbeitungszeiten und -kosten gering halten zu können, müssen universelle Werkzeuge eingesetzt werden, welche für verschiedenste Bearbeitungsaufgaben ausgelegt sind. Grosse Zeitspanvolumina bei der Schrupp- und Schlichtbearbeitung erfordern den Einsatz von Fräswerkzeugen auch im größeren Durchmesserbereich. Mit der erfindungsgemäßen Schneidwerkzeuglösung wird den dahingehenden Anforderungen im modernen Werkzeugformenbau Rechnung getragen.

Weitere vorteilhafte Ausführungsformen des erfindungsgemäßen Schneidwerkzeugs sind Gegenstand der weiteren Unteransprüche.

Im Folgenden wird das erfindungsgemäße Schneidwerkzeug anhand eines Ausführungsbeispiels nach der Zeichnung näher erläutert. Dabei zeigen in prinzipieller und nicht maßstäblicher Darstellung die
- Fig. 1: in perspektivischer Draufsicht einer Ausgestaltung eines Schneideinsatzes,
- Fig. 2: in perspektivischer Draufsicht eine Ausgestaltung eines erfindungsgemäßen Halters ohne eingesetzten Schneideinsatz,
- Fig. 3: in perspektivischer Draufsicht eine Ausgestaltung eines erfindungsgemäßen Schneidwerkzeugs,
- Fig. 4: in Vorderansicht eine Ausgestaltung eines erfindungsgemäßen Schneidwerkzeugs, und
- Fig. 5: in Draufsicht auf das Schneidwerkzeug gemäß Fig. 4.

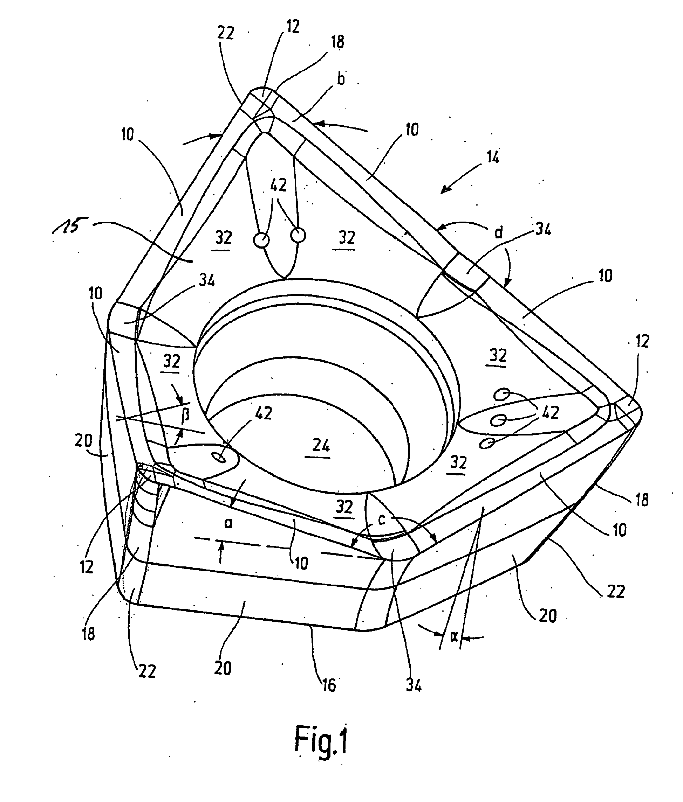

Zunächst soll eine Ausgestaltung eines Schneideinsatzes erläutert werden, wie er bei dem erfindungsgemäßen Schneidwerkzeug eingesetzt werden kann. Ein solcher Schneideinsatz ist beispielsweise aus der EP 1736266 A1 bekannt. Der in Fig. 1 dargestellte Schneideinsatz 14 ist mit sechs Schneidkanten 10 versehen, die in einem schrägen Kantenverlauf in einer oben liegenden Ebene jeweils in einer Spitze 12 des Schneideinsatzes 14 ausmünden. Bevorzugt ist dabei jede zweite Schneidkante gleich ausgestaltet. Der Schneideinsatz 14 ist von seiner Bodenfläche 16, die eben verlaufend ausgebildet ist, in Richtung dreier Begrenzungslinien 18 zur jeweils zuordenbaren Spitze 12 hin konvex gekrümmt ausgebildet. Sofern die jeweilige Spitze 12 nebst Begrenzungslinie 18 angesprochen sind, sind diese gemäß der Darstellung nach der Fig. 1 in ihrem jeweiligen Verlauf ballig abgerundet.

Wie sich des Weiteren aus der Fig. 1 entnehmen lässt, ist der jeweilige schräge Kantenverlauf der Schneidkante 10 geradlinig ausgebildet und der schräge Kantenverlauf steigt um einen Anstiegswinkel a von ca. 20° gegenüber einer parallelen Fläche zur Bodenfläche 16 des Schneideinsatzes 14 an. Es wären hier auch andere Anstiegswinkel denkbar in der Größenordnung von 10° bis 40° je nach Schneidaufgabe für den Schneideinsatz. Insoweit weist der Schneideinsatz für die jeweilige Schneidkante 10 im Bereich der Oberseite (Deckfläche) 15 des Schneideinsatzes 14 keinen konkavbogenförmigen, sondern einen geradlinigen Verlauf auf, was die Herstellung vereinfachen hilft.

Der Schneideinsatz 14 ist unterhalb einer jeden Schneidkante 10 in Richtung seiner Bodenfläche 16 über eine vorgebbare Wegstrecke mit einem konvex gekrümmten Wandteil 20 versehen, längs dessen Krümmung die jeweilige Schneidkante 10 in einer weiteren, seitlich angeordneten Ebene nachfolgt und insofern nach außen hin konvex gekrümmt ist bzw. eine ballige Form einnimmt. Durch die ballige Form für die Schneidkanten 10 ergibt sich eine Art Drallwinkel mit verbesserten Schnittbedingungen. Durch den Bogenschliff für das jeweilige Wandteil 20 ist eine stabilere Schneidgeometrie im Bereich der jeweiligen Schneidkante 10 erreicht. Bevorzugt ist dieser Bogenschliff nur für jede zweite Schneidkante 10 verwendet, insbesondere für die bei dem erfindungsgemäßen Schneidwerkzeug aktiven Schneidkanten.

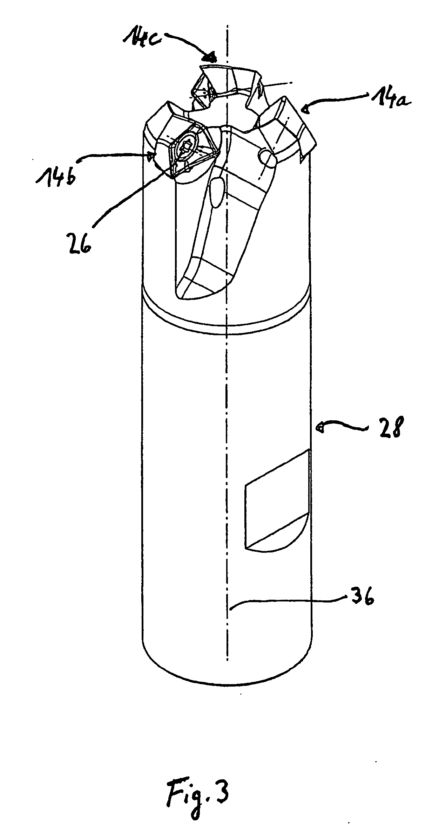

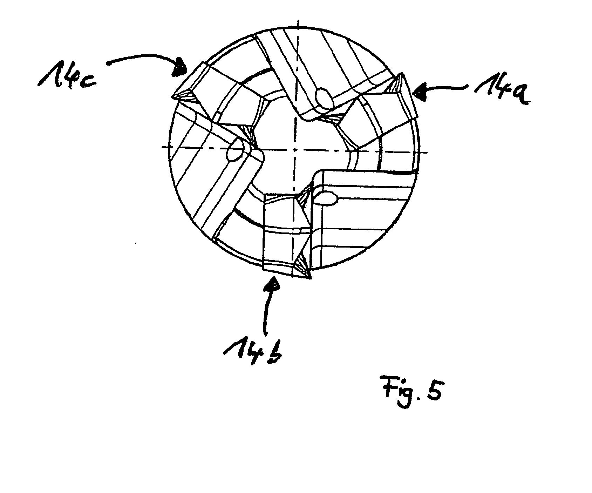

Insgesamt ergibt sich für den Schneideinsatz eine kompakte Bauweise, bei der die Höhe der jeweiligen Spitze 12 gegenüber der Bodenfläche 16 der Breite eines Wandteils 20 gemessen in der Höhe der Bodenfläche 16 entspricht, so dass sich für das Gesamtwerkzeug eine Art stabile Kronenform ergibt, die eingeleitete Schneidkräfte über die Bodenfläche 16 gleichförmig in einen Halter, in dem der Schneideinsatz gehalten wird (vgl. Fig. 3 bis 5), ableiten hilft.

Ferner lässt sich der Schneideinsatz 14 in Abhängigkeit der balligen Ausgestaltung im Bereich der jeweiligen Spitze 12 mit verschiedenen Schneideckenradien versehen, so dass der Schneideinsatz an verschiedenste zu bearbeitende Werkstückgeometrien anpassbar ist. Insbesondere ist der Schneideinsatz an verschiedene Durchmesser ab Werkzeugdurchmesser von 16 mm anpassbar. Da die Spitzen 12 selbst gleichfalls spanende Eigenschaften besitzen, weist der Schneideinsatz in einem jeden wirksamen Eckbereich 22 drei Schneiden in axialer und radialer Richtung wirkend auf in Form zweier benachbarter Schneidkanten 10, die in eine zuordenbare Spitze 12 ausmünden. Insgesamt ergibt sich hierdurch eine Art trigonförmige Platte mit einem 90° Eckwinkel, eingeschlossen zwischen zwei benachbarten Schneidkanten 10 eines jeden Eckbereichs 22 gemessen an der eingeschlossenen Spitze 12. Dergestalt lässt sich mit dem 90° Eckwinkel ein Eckfräsverfahren durchführen. Der dahingehende Eckwinkel ist in Blickrichtung auf die Fig. 1 gesehen exemplarisch oben als fiktiver Schneidkantenwinkel b eingetragen.

Wie des Weiteren Fig. 1 zeigt, ist der Schneideinsatz 14 mit einer zylindrischen Durchgriffsöffnung 24 versehen für den Durchgriff eines Festlegemittels in Form einer Innensechskantschraube 26 gemäss der bildlichen Darstellung nach den Fig. 3 bis 5. Anstelle der genannten Innensechskantschraube können auch sog. Torx^{®}-Schrauben oder andere Festlegemittel zum Einsatz kommen. Die dahingehende Innensechskantschraube 26 weist einen geringen seitlichen Versatz gegenüber den zugehörigen Gewindegängen 27 im Halter 28 des Fräswerkzeuges auf, so dass insoweit beim Festlegen des Schneideinsatzes am Plattensitz 30 des Halters 28 sich die balligen Wandteile 20 gegen die ebenen Anlageflächen am Plattensitz 30 anpressen, so dass insoweit längs von ballig geformten Anlagesegmenten die Abstützung des Schneideinsatzes im Halter 28 erfolgt, was zu einer exakten Selbstzentrierung führt mit günstigen Einflüssen für die Bearbeitungsgenauigkeit.

Ferner geht, wie bei dahingehenden Wendeschneidplatten üblich, die jeweilige Schneidkante 10 unter Bildung eines Spanwinkels β in eine Spanfläche 32 über, die mit einem konkaven Flächenverlauf in die Durchgriffsöffnung 24 ausmündet. Neben dem Spanwinkel β ist ein Freiwinkel α definiert, gebildet durch eine an der Vorderseite der Schneidkante 10 angreifende Vertikale gegenüber einer Tangente, angelegt an der ballig zurückgesetzten Fläche des Wandteils 20 (Fig. 1). Dergestalt ist stirnseitig ein entsprechender Freiwinkel α durch die Gesamtlösung geschaffen sowie ein angepasster Spanwinkel β stirnseitig und radial vorhanden.

Aufgrund des Schrägverlaufs einer jeden Schneidkante 10 mündet diese von der Spitze 12 kommend in ein Tal 34 aus, an das sich dann entsprechend eine benachbarte Schneidkante 10 anschließt, die quer zur Talrichtung mit der benachbarten Schneidkante 10 einen stumpfen Winkel c von etwa 130° bis 150°, vorzugsweise von etwa 140°, einschließt. Das dahingehende Winkelmaß gilt in etwa auch für den stumpfen Außenwinkel d im Bereich eines jeden Tals 34, wobei vorzugsweise der Außenwinkel d im Bereich von etwa 130° bis 170°, vorzugsweise von etwa 150°, gewählt ist.

Erfindungsgemäß wurde zunächst erkannt, dass der in Fig. 1 gezeigte Schneideinsatz 14 nicht nur zum Eckfräsen eines 90° Eckwinkels geeignet ist, sondern dass derselbe Schneideinsatz 14 auch zum Fräsen von Schultern oder Fasen mit anderen Winkeln, z.B. 30°, 45° oder 60° und beispielsweise als entsprechender Tauchfräser eingesetzt werden kann. Dazu wird der Schneideinsatz gegenüber der in der EP 1736266 A1 gezeigten Position verdreht und in einer anderen Winkelposition an dem Halter angebracht, wozu der Plattensitz in dem Halter erfindungsgemäß anders ausgestaltet und angeordnet ist.

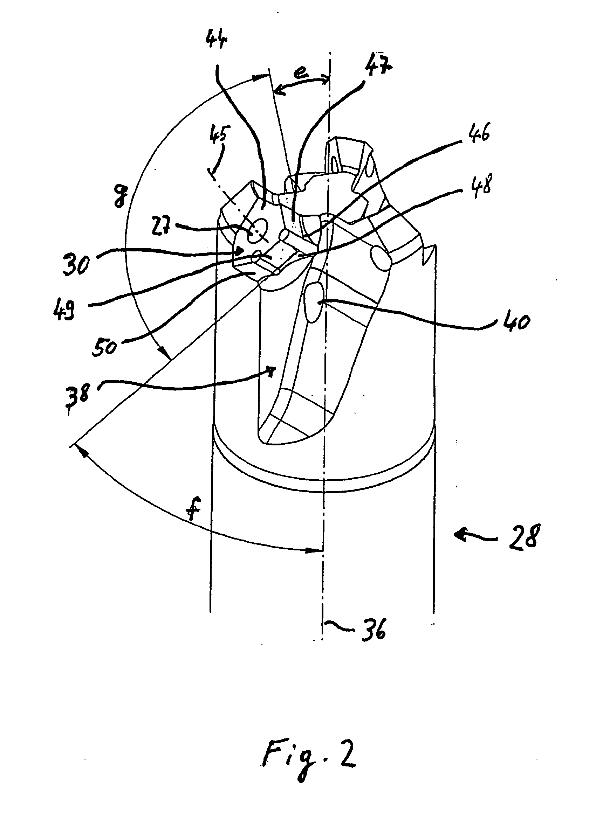

Fig. 2 zeigt einen erfindungsgemäßen Halter 28 in einer perspektivischen Draufsicht ohne eingesetzten Schneideinsatz. In einer segmentförmigen Ausnehmung 38 weist dieser Halter 28 einen Plattensitz 30 auf, in dem der Schneideinsatz 14 aufgenommen werden kann. Dieser Plattensitz 30 weist eine Bodenabstützfläche 44, die zur (bevorzugt vollständigen) Abstützung der ebenen Bodenfläche 16 des Schneideinsatzes 14 dient, so dass insoweit eine Plattensitzauflage parallel zur Werkzeugachse 36 des Halters 28 erreicht wird.

Ferner weist der Plattensitz 30 mehrere quer zur Bodenabstützfläche 44 angeordnete seitliche Flächen 46, 47, 48, 49, 50 auf. Von diesen seitlichen Flächen dienen bevorzugt jedoch nur die beiden seitlichen (bevorzugt, aber nicht zwingend, ebenen und senkrecht zur Bodenabstützfläche 44 angeordneten) Flächen 46, 48 dabei als Abstützflächen zur Abstützung zweier angrenzender benachbarter Anlageflächen (Wandflächen 20) des Schneideinsatzes 14. Diese Abstützflächen sind - verglichen mit den weiteren seitlichen Flächen 47, 49, 50 verhältnismäßig klein und grenzen nicht direkt an die Bodenabstützfläche 44 an, sondern grenzen an die benachbarten (größeren) seitlichen Flächen 47, 49 an, die wiederum an die Bodenabstützfläche 44 angrenzen. Bevorzugt bilden die Abstützflächen 46 und 48 mit der jeweils benachbarten seitlichen Fläche 47 bzw. 49 einen stumpfen Winkel im Bereich zwischen 130° und 180°, vorzugsweise geringfügig kleiner als 180°.

Die weiteren seitlichen Flächen 47, 49, 50 dienen dagegen bevorzugt nicht als Abstützflächen einer entsprechenden Fläche des Schneideinsatzes 14, sondern sind bewusst so ausgestaltet, dass die angrenzenden seitlichen Flächen des Schneideinsatzes 14 diese seitlichen Fläche 50 möglichst nicht berühren oder sich zumindest darauf nicht abstützen bei eingesetztem Schneideinsatz 14 und in Einsatz befindlichem Schneidwerkzeug, was ansonsten eine Überbestimmung der Lage des Schneideinsatzes und damit eine undefinierte Lage zur Folge hätte.

Ferner weist der Halter 28 in der Ausnehmung 38 bevorzugt einen Kühlmittelaustritt 40 auf für die Versorgung der aktiven Schneiden des eingesetzten Schneideinsatzes 14.

Um mit dem erfindungsgemäßen Schneidwerkzeug eine Schulter oder eine Fase mit einem gewünschten Fasenwinkel zu fräsen, ist der Plattensitz 28 nicht nur, wie oben erläutert, anders ausgestaltet, sondern auch gegenüber der in der EP 1736266 A1 beschriebenen Position um eine durch die Gewindegänge 27 und senkrecht zur Bodenabstützfläche 44 verlaufende Rotationsachse 45 verdreht. Erfindungsgemäß wurde jedoch erkannt, dass bei gewünschtem Fasenwinkel von beispielsweise 45° der Plattensitz 30 nicht einfach um 45° verdreht werden kann gegenüber der bekannten Anordnung, die für eine Fräsen eines Fasenwinkels bzw. Eckwinkels von 90° ausgestaltet ist. Vielmehr ist dieser Verdrehwinkel aufgrund der Tatsache, dass die Spitze 12 des Schneideinsatzes vorauseilt, geringfügig (max. 1-2°, bevorzugt max. 0,5°) größer oder kleiner als die Differenz zwischen den beiden zu erzielenden Fasenwinkeln (also in dem genannten Beispiel geringfügig größer oder kleiner als 45° (90°-45°)).

Die genaue Position des Schneideinsatzes 14 im Halter 28 wird durch die Positionierung der Abstützflächen 46, 48 bestimmt. Insbesondere wird deren Lage durch die vorgebbaren Flächenwinkel e und f zwischen der jeweiligen Abstützfläche 46, 48 und der Werkzeugachse 36 bestimmt, wobei e+f+g=180° gilt und der Abstützwinkel g bei der vorliegend gezeigten Ausgestaltung des Schneideinsatzes 14 dem Schneidkantenwinkel b (vgl. Fig. 1) entspricht und vorliegend beispielsweise 90° beträgt. Der Abstützwinkel g ist also durch den Winkel zwischen den beiden Anlageflächen, die durch die Abstützflächen 46, 48 abgestützt werden sollen, vorgegeben, während der Flächenwinkel e bzw. f entsprechend dem gewünschten Fasenwinkel gewählt werden kann. Die Wahl der Größe des Flächenwinkels e bzw. f hängt dabei natürlich auch von der konkreten Ausgestaltung des Schneideinsatzes 14 aus, insbesondere des genauen Verlaufs der Hauptschneidkante 10c und der Betrags, um den die angrenzende Spitze 12c dem angrenzenden Tal 34c vorauseilt.

Die Figuren 3 bis 5 zeigen ein erfindungsgemäßes Schneidwerkzeug mit eingesetztem Schneideinsatz aus unterschiedlichen Perspektiven. Bei dieser Ausgestaltung und Anordnung dient die Schneidkante 10c als Hauptschneide, mit der beispielsweise eine Schulter oder eine Fase mit einem durch die Winkelposition des Schneideinsatzes im Halter vorgebbaren Winkel (z.B. von 45°) in einem Werkstück exakt gefräst werden kann. Das Schneidwerkzeug kann somit bevorzugt als Tauchfräser, beispielsweise zum Herstellen von Fasen oder Konturen mit einem vorgegebenen Winkel von z.B. 45°, eingesetzt werden.

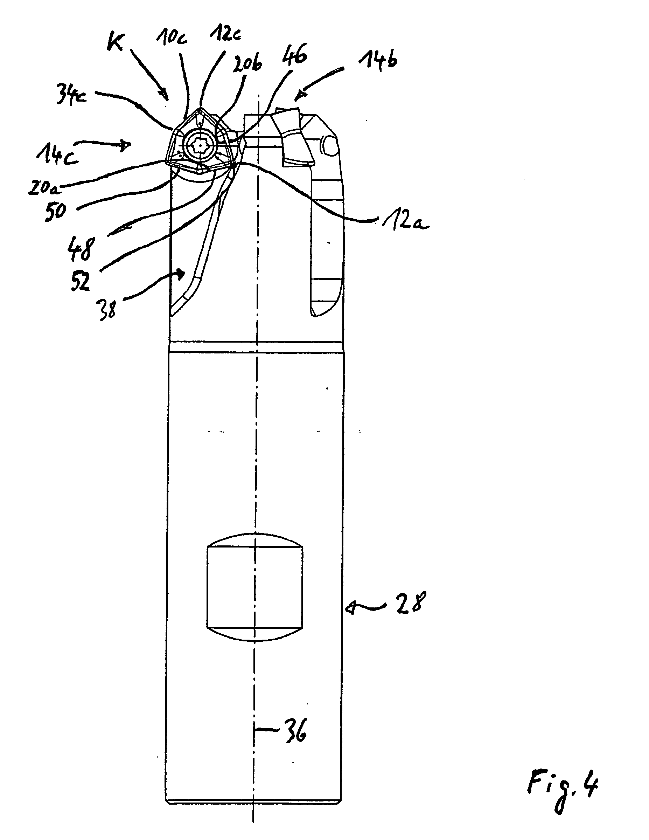

Erfindungsgemäß wurde erkannt, dass eine optimale und stabile Abstützung des Schneideinsatzes erreicht wird, wenn die beiden an die innen im Plattensitz 30 liegende Spitze 12a angrenzenden seitlichen Flächen 20a, 20b des Schneideinsatzes 14 über entsprechende Abstützflächen 46, 48 abgestützt werden. Die auf die Hauptschneide 10c einwirkende Kraft K verläuft - wie in Fig. 4 angedeutet - im Wesentlichen in Richtung auf die (in Fig. 4 senkrecht zur Zeichenebene verlaufende) Schnittlinie 52 der beiden Abstützflächen 46, 48 und presst somit quasi den Schneideinsatz 14 optimal in diese Richtung in den Plattensitz 30 hinein.

Die Abstützflächen 46, 48 sind verhältnismäßig klein ausgestaltet und gewährleisten eine beinahe nur linienförmige Abstützung. Insbesondere wenn die benachbarten Anlageflächen 20a, 20b einen Bogenschliff aufweisen, berühren diese Anlageflächen die seitlichen Flächen 47, 49 nicht oder stützen sich dort zumindest nicht auf.

Gegenüber bekannten Schneidwerkzeugen und auch dem in der EP 1736266 A beschriebenen Schneideinsatz ist die Abstützung nochmals verbessert. Auch gegenüber auf die aktive Schneidkante wirkenden Querkraftkomponenten erfolgt eine optimale Abstützung, so dass auch beim Fräsen von Winkeln ungleich 90° ein Verkippen oder Verdrehen des Schneideinsatzes im Halter nicht auftreten kann. Dies führt zu einer Verlängerung der Lebensdauer des Schneideinsatzes und einer Erhöhung der Fertigungsgenauigkeit am Werkstück.

Wie die Figuren 3 bis 5 des weiteren verdeutlichen, können mehrere, beispielsweise drei, Schneideinsätze 14a, 14b, 14c außenumfangsseitig an der Vorderseite des Halters 28 angeordnet sein.

Der Schneideinsatz 14 ist ferner bevorzugt in der Art einer Wendeschneidplatte ausgebildet, so dass bei jeweils im Einsatz verbrauchten Schneidgeometrien diese durch Wechseln der Platte austauschbar sind. Für die dahingehende Plausibilitäts-überprüfung weist der Schneideinsatz 14 an seiner Oberseite eine Kennzeichnung, vorzugsweise in Form von punktförmigen Vertiefungen 42 (vgl. Fig. 1) auf, die einem jeden wirksamen Eckbereich 22 zugeordnet sind. Dergestalt ist beim Austauschen des Schneideinsatzes oder beim Wechseln der Eckbereiche 22 für einen Schneideinsatz für eine Bedienperson die Handhabung deutlich vereinfacht.

Das erfindungsgemäße Schneidwerkzeug lässt sich mittels einer geeigneten Bearbeitungseinrichtung (z.B. einer CNC-gestalteten Werkzeugmaschine) für vielseitigste Bearbeitungsaufgaben einsetzen, beispielsweise für Planfräsen, Taschenfräsen, Aufweiten, Tauchfräsen von Winkeln oder Fasen, auch ungleich 90° etc.. Ferner können in Abhängigkeit des gewünschten Bearbeitungsdurchmessers alle gängigen Schaftabmessungen für den Halter 28 zum Einsatz kommen. Insoweit ist auch die eingesetzte Anzahl an Wendeschneidplatten in Form des Schneideinsatzes abhängig vom angesprochenen Durchmesser des Halters 28.

Es versteht sich, dass die vorliegende Erfindung nicht auf die gezeigte Ausgestaltung beschränkt ist. Insbesondere ist es nicht erforderlich, dass der Schneideinsatz wie in Fig. 1 ausgestaltet, also insbesondere als Wendeschneidplatte mit mehreren Schneidkanten ausgestaltet ist. Grundsätzlich kann die vorliegende Erfindung auch bei einem Schneideinsatz mit einer einzigen Schneidkante und zwei Anlageflächen eingesetzt werden. Ferner müssen grundsätzlich die Schneidkanten nicht schräg zwischen Spitzen und Tälern verlaufen, und auch die Seitenflächen müssen nicht zwingend ballig gewölbt sein.

Auch der Halter kann anders als gezeigt ausgestaltet sein. Weder sind drei Plattensitze erforderlich, noch müssen die Abstützflächen wie gezeigt ausgestaltet sein. Wesentlich ist, dass die Abstützflächen so ausgebildet und angeordnet sind, dass sie die Anlageflächen des Schneideinsatzes optimal abstützen.

## Patentansprüche

1. Schneidwerkzeug für spanende Bearbeitung von Werkstücken, mit einem Schneideinsatz (14) und einem Halter (18) mit einem Sitz (30) zur Aufnahme des Schneideinsatzes (14), wobei
- der Schneideinsatz (14) mindestens eine Schneidkante (10) aufweist, die relativ zu einer Bodenfläche (16) des Schneideinsatzes (14) schräg und entlang einer der Bodenfläche (16) gegenüber liegenden Deckfläche (15) verläuft und in einer Spitze (12) des Schneideinsatzes (14) ausmündet,
- der Schneideinsatz (14) an einer der Schneidkante (10) gegenüber liegenden, zwischen Bodenfläche (16) und Deckfläche (15) verlaufenden Seite (20) zwei unter einem Anlagewinkel (b) zueinander verlaufende Anlageflächen (20a, 20b) aufweist,
- der Sitz (30) in dem Halter (28) eine Bodenabstützfläche (44) zur Abstützung der Bodenfläche (16) des Schneideinsatzes (14) und zwei quer zur Bodenabstützfläche (44) und unter einem Abstützwinkel (g) verlaufende Abstützflächen (46, 48) zur Abstützung der Anlageflächen (20a, 20b) des Schneideinsatzes (14) aufweist, an die sich jeweils eine Wandfläche (20) anschließt, die unter einem Außenwinkel (d) zu der angrenzenden Anlagefläche (20a, 20b) verläuft, der größer ist als Anlagewinkel (b)
- der Anlagewinkel (b) dem Abstützwinkel (g) entspricht, und
- die Abstützflächen (46, 48) die unter dem Anlagewinkel (b) zueinander verlaufenden Anlageflächen (20a, (20b) abstützen, **dadurch gekennzeichnet dass**, die Abstützflächen (46,48) so ausgebildet und angeordnet sind dass die beim Einsatz des Schneidwerkzeugs auf die mindestens eine Schneidkante (10) einwirkende Schneidkraft (K) im Wesentlichen in Richtung auf die Schnittlinie (52) der Abstützflächen (46, 48) verläuft und dass die Schnittlinie (52) der Abstützflächen (46, 48) in einem Abstand von einer zentralen Werkzeugachse (36) beabstandet ist, der kleiner ist als der Abstand der übrigen Teilen der Abstützflächen (46, 48) von der zentralen Werkzeugachse 36).

2. Schneidwerkzeug nach Anspruch 1,
**dadurch gekennzeichnet, dass** der Sitz (30) in dem Halter (28) derart angeordnet ist, dass die Abstützflächen (46, 48) unter jeweils einem sich längs des Halter (28) erstreckenden Werkzeugachse (36) jeweils einen vorgebbaren Flächenwinkel (e, f) verlaufen, über den ein mit dem Schneidwerkzeug erzeugbarer Fasenwinkel vorgebbar ist.

3. Schneidwerkzeug nach einem der vorstehenden Ansprüche,
**dadurch gekennzeichnet, dass** der Schneideinsatz (14) von seiner Bodenfläche (16) ausgehend in Richtung einer Begrenzungslinie (18) zur Spitze (12) hin konvex gekrümmt ausgebildet ist, dass der schräge Kantenverlauf der Schneidkante (10) in einer Ebene geradlinig ausgebildet ist und dass der Schneideinsatz (14) unterhalb der Schneidkante (10) in Richtung seiner Bodenfläche (16) über eine vorgebbare Wegstrecke ein konvex gekrümmtes Wandteil (20) aufweist, längs dessen Krümmung die Schneidkante (10) in einer weiteren Ebene nachfolgt.

4. Schneidwerkzeug nach Anspruch 3,
**dadurch gekennzeichnet, dass** der Schneideinsatz (14) eine Durchgriffsöffnung (24) aufweist für den Durchgriff eines Festlegemittels (26) und dass die Schneidkante (10) unter Bildung des Spanwinkels (β) in eine Spanfläche (32) übergeht, die mit einem konkaven Flächenverlauf in die Durchgriffsöffnung (24) ausmündet.

5. Schneidwerkzeug nach Anspruch 3 oder 4,
**dadurch gekennzeichnet, dass** zur Spitze (12) des Schneideinsatzes (14) sich benachbart an die Schneidkante (10) eine weitere Schneidkante (10) vergleichbarer Geometrie anschließt und dass die beiden benachbarten Schneidkanten (10) einen vorgebbaren Schneidkantenwinkel (b) miteinander einschließen.

6. Schneidwerkzeug nach Anspruch 5,
**dadurch gekennzeichnet, dass** der vorgebbare Schneidkantenwinkel (b) zwischen den benachbarten Schneidkanten (10) zwischen 80° und 100°, insbesondere etwa 90°, beträgt.

7. Schneidwerkzeug nach Anspruch 5,
**dadurch gekennzeichnet, dass** der vorgebbare Schneidkantenwinkel (b) dem Anlagewinkel (b) und dem Abstützwinkel (g) entspricht.

8. Schneidewerkzeug nach einem der vorstehenden Ansprüche,
**dadurch gekennzeichnet, dass** die Schneidkante (10) von der Spitze (12) kommend in ein Tal (34) des Schneideinsatzes (14) ausmündet, an das sich eine benachbarte Schneidkante (10) anschließt, die quer zur Talrichtung mit der benachbarten Schneidkante (10) einen stumpfen Talwinkel (c) begrenzt.

9. Schneidwerkzeug nach Anspruch 8,
**dadurch gekennzeichnet, dass** der Wert des stumpfen Talwinkels (c) zwischen 130° und 150°, insbesondere etwa 140°, beträgt.

10. Schneidwerkzeug nach einem der vorstehenden Ansprüche,
**dadurch gekennzeichnet, dass** die in der weiteren Ebene jeweils schräg ansteigende Schneidkante (10) gegenüber der Bodenfläche (16) des Schneideinsatzes (14) einen Anstiegswinkels (a) zwischen 10° und 40°, insbesondere etwa 20°, einschließt.

11. Schneidwerkzeug nach einem der vorstehenden Ansprüche,
**dadurch gekennzeichnet, dass** der Schneideinsatz (14) in der Art einer Wendeschneidplatte ausgebildet ist mit drei voreilenden Spitzen (12) und insgesamt sechs Schneidkanten (10).

12. Schneidwerkzeug nach einem der vorstehenden Ansprüche,
**dadurch gekennzeichnet, dass** die jeweilige Spitze (12) zumindest an den Stellen des Überganges von benachbart angeordneten Schneidkanten (10) verrundet ist.

13. Halter für ein Schneidwerkzeug für spanende Bearbeitung von Werkstücken, mit einem Sitz (30) zur Aufnahme eines Schneideinsatzes (14), wobei der Schneideinsatz (14) mindestens eine Schneidkante (10) aufweist, die relativ zu einer Bodenfläche (16) des Schneideinsatzes (14) schräg und entlang einer der Bodenfläche (16) gegenüber liegenden Deckfläche (15) verläuft und in einer Spitze (12) des Schneideinsatzes (14) ausmündet, und wobei der Schneideinsatz (14) an einer der Schneidkante (10) gegenüber liegenden, zwischen Bodenfläche (16) und Deckfläche (15) verlaufenden Seite (20) zwei unter einem Anlagewinkel (b) zueinander verlaufende Anlageflächen (20a, 20b) aufweist, an die sich jeweils eine Wandfläche (20) anschließt, die unter einem Außenwinkel (d) zu der angrenzenden Anlagefläche (20a, 20b) verläuft, der größer ist als Anlagewinkel (b),
wobei
- der Sitz (30) in dem Halter (28) eine Bodenabstützfläche (44) zur Abstützung der Bodenfläche (16) des Schneideinsatzes (14) und zwei quer zur Bodenabstützfläche (44) und unter einem Abstützwinkel (g) verlaufende Abstützflächen (46, 48) zur Abstützung der Anlageflächen (20a, 20b) des Schneideinsatzes (14) aufweist,
- der Anlagewinkel (b) dem Abstützwinkel (g) entspricht, und
- die Abstützflächen (46, 48) die unter dem Anlagewinkel (b) zueinander verlaufenden Anlageflächen (20a, 20b) abstützen, **dadurch gekennzeichnet dass**, die Abstützflächen (46, 48) so ausgebildet und angeordnet sind, dass die beim Einsatz des Schneidwerkzeugs auf die mindestens eine Schneidkante (10) einwirkende Schneidkraft (K) im Wesentlichen in Richtung auf die Schnittlinie (52) der Abstützflächen (46, 48) verläuft, und dass die Schnittlinie (52) der Abstützflächen (46, 48) in einem Abstand von einer zentralen Werkzeugachse (36) beabstandet ist, der kleiner ist als der Abstand der übrigen Teilen der Abstützflächen (46, 48) von der zentralen Werkzeugachse (36).

## Claims

1. Cutting tool for machining workpieces, having a cutting insert (14) and a holder (18) having a seat (30) for holding the cutting insert (14), wherein
- the cutting insert (14) has at least one cutting edge (10) which extends obliquely in relation to a bottom surface (16) of the cutting insert (14) and along a top surface (15) located opposite the bottom surface (16) and leads out in a tip (12) of the cutting insert (14),
- the cutting insert (14) has two bearing surfaces (20a, 20b) on a side (20) opposite the cutting edge (10) and extending between the bottom surface (16) and the top surface (15), said bearing surfaces (20a, 20b) extending at a bearing angle (b) to one another,
- the seat (30) in the holder (28) has a bottom supporting surface (44) for supporting the bottom surface (16) of the cutting insert (14) and two supporting surfaces (46, 48), which extend transversely to the bottom supporting surface (44) and at a supporting angle (g), for supporting the bearing surfaces (20a, 20b) of the cutting insert (14), said bearing surfaces (20a, 20b) being adjoined in each case by a wall surface (20) which extends at an external angle (d) to the adjoining bearing surface (20a, 20b), said external angle (d) being greater than the bearing angle (b),
- the bearing angle (b) corresponds to the supporting angle (g), and
- the supporting surfaces (46, 48) support the bearing surfaces (20a, 20b) extending at a bearing angle (b) to one another, **characterized in that** the supporting surfaces (46, 48) are designed and arranged such that the cutting force (K) that acts on the at least one cutting edge (10) when the cutting tool is used extends substantially in the direction of the intersection line (52) of the supporting surfaces (46, 48), and **in that** the intersection line (52) of the supporting surfaces (46, 48) is spaced apart from a central tool axis (36) by a distance which is smaller than the distance of the remaining parts of the supporting surfaces (46, 48) from the central tool axis (36).

2. Cutting tool according to Claim 1,
**characterized in that** the seat (30) in the holder (28) is arranged such that the supporting surfaces (46, 48) extend in each case at a predeterminable surface angle (e, f) to a tool axis (36) extending along the holder (28), it being possible by way of said surface angle (e, f) to predetermine a chamfer angle that is producible with the cutting tool.

3. Cutting tool according to either of the preceding claims,
**characterized in that** the cutting insert (14) is formed with a convex curvature starting from its bottom surface (16) in the direction of a boundary line (18) towards the tip (12), **in that** the oblique edge profile of the cutting edge (10) is formed in a straight line in a plane, and **in that** the cutting insert (14) has a convexly curved wall part (20) over a predeterminable distance underneath the cutting edge (10) in the direction of its bottom surface (16), the cutting edge (10) following in a further plane along the curvature of said wall part (20).

4. Cutting tool according to Claim 3,
**characterized in that** the cutting insert (14) has a through-opening (24) for a fixing means (26) to pass through, and **in that** cutting edge (10) merges into a rake face (32), while forming a rake angle (β), said rake face (32) leading out into the through-opening (24) by way of a concave surface profile.

5. Cutting tool according to Claim 3 or 4,
**characterized in that** at the tip (12) of the cutting insert (14) the cutting edge (10) is adjoined by a further cutting edge (10) of comparable geometry, and **in that** the two adjacent cutting edges (10) enclose a predeterminable cutting-edge angle (b) with one another.

6. Cutting tool according to Claim 5,
**characterized in that** the predeterminable cutting-edge angle (b) between the adjacent cutting edges (10) is between 80° and 100°, in particular about 90°.

7. Cutting tool according to Claim 5,
**characterized in that** the predeterminable cutting-edge angle (b) corresponds to the bearing angle (b) and the supporting angle (g).

8. Cutting tool according to one of the preceding claims,
**characterized in that** the cutting edge (10), coming from the tip (12), leads out into a valley (34) in the cutting insert (14), said valley adjoining an adjacent cutting edge (10) which delimits an obtuse valley angle (c) with the adjacent cutting edge (10) transversely to the valley direction.

9. Cutting tool according to Claim 8,
**characterized in that** the value of the obtuse valley angle (c) is between 130° and 150°, in particular about 140°.

10. Cutting tool according to one of the preceding claims,
**characterized in that** the cutting edge (10) rising in each case obliquely in the further plane encloses a rising angle (a) of between 10° and 40°, in particular about 20°, with respect to the bottom surface (16) of the cutting insert (14).

11. Cutting tool according to one of the preceding claims,
**characterized in that** the cutting insert (14) is formed in the manner of an indexable cutting insert having three leading tips (12) and a total of six cutting edges (10).

12. Cutting tool according to one of the preceding claims,
**characterized in that** each tip (12) is rounded at least at the points of the transition from adjacently arranged cutting edges (10).

13. Holder for a cutting tool for machining workpieces, having a seat (30) for holding a cutting insert (14), wherein the cutting insert (14) has at least one cutting edge (10) which extends obliquely in relation to a bottom surface (16) of the cutting insert (14) and along a top surface (15) located opposite the bottom surface (16) and leads out in a tip (12) of the cutting insert (14), and wherein the cutting insert (14) has two bearing surfaces (20a, 20b) on a side (20) opposite the cutting edge (10) and extending between the bottom surface (16) and the top surface (15), said bearing surfaces (20a, 20b) extending at a bearing angle (b) to one another and being adjoined in each case by a wall surface (20) which extends at an external angle (d) to the adjoining bearing surface (20a, 20b), said external angle (d) being greater than the bearing angle (b),
wherein
- the seat (30) in the holder (28) has a bottom supporting surface (44) for supporting the bottom surface (16) of the cutting insert (14) and two supporting surfaces (46, 48), which extend transversely to the bottom supporting surface (44) and at a supporting angle (g), for supporting the bearing surfaces (20a, 20b) of the cutting insert (14),
- the bearing angle (b) corresponds to the supporting angle (g), and
- the supporting surfaces (46, 48) support the bearing surfaces (20a, 20b) extending at a bearing angle (b) to one another, **characterized in that** the supporting surfaces (46, 48) are designed and arranged such that the cutting force (K) that acts on the at least one cutting edge (10) when the cutting tool is used extends substantially in the direction of the intersection line (52) of the supporting surfaces (46, 48), and **in that** the intersection line (52) of the supporting surfaces (46, 48) is spaced apart from a central tool axis (36) by a distance which is smaller than the distance of the remaining parts of the supporting surfaces (46, 48) from the central tool axis (36).

## Revendications

1. Outil de coupe pour l'usinage par enlèvement de copeaux de pièces à usiner, comprenant une plaquette de coupe (14) et un support (18) avec un siège (30) pour recevoir la plaquette de coupe (14),
- la plaquette de coupe (14) présentant au moins une arête de coupe (10), qui s'étend obliquement par rapport à une face de fond (16) de la plaquette de coupe (14) et le long d'une face de recouvrement (15) opposée à la face de fond (16) et qui se termine par une pointe (12) de la plaquette de coupe (14),
- la plaquette de coupe (14) présentant, au niveau d'un côté (20) opposé à l'arête de coupe (10), entre la face de fond (16) et la face de recouvrement (15), deux faces d'application (20a, 20b) s'étendant suivant un angle d'application (b) l'une par rapport à l'autre,
- le siège (30) dans le support (28) présentant une face de support de fond (44) pour supporter la face de fond (16) de la plaquette de coupe (14) et deux faces de support (46, 48) s'étendant transversalement à la face de support de fond (44) et suivant un angle de support (g) pour supporter les faces d'application (20a, 20b) de la plaquette de coupe (14), auxquelles se raccorde une face de paroi (20) respective, qui s'étend suivant un angle extérieur (d) par rapport à la face d'application adjacente (20a, 20b), l'angle extérieur (d) étant supérieur à l'angle d'application (b),
- l'angle d'application (b) correspondant à l'angle de support (g), et
- les faces de support (46, 48) supportant les faces d'application (20a, 20b) s'étendant l'une par rapport à l'autre suivant l'angle d'application (b),
**caractérisé en ce que** les faces de support (46, 48) sont réalisées et disposées de telle sorte que la force de coupe (K) agissant lors de l'utilisation de l'outil de coupe sur l'au moins une arête de coupe (10) s'étende essentiellement dans la direction de la ligne de coupe (52) des faces de support (46, 48), et **en ce que** la ligne de coupe (52) des faces de support (46, 48) est espacée d'un axe d'outil central (36) d'une distance qui est inférieure à la distance des autres parties des surfaces de support (46, 48) à l'axe d'outil central (36).

2. Outil de coupe selon la revendication 1,
**caractérisé en ce que** le siège (30) est disposé dans le support (28) de telle sorte que les faces de support (46, 48) s'étendent suivant à chaque fois un angle de surface (e, f) prédéfinissable, par rapport à un axe d'outil (36) s'étendant le long du support (28), par l'intermédiaire duquel angle de surface (e, f) un angle de chanfrein pouvant être produit avec l'outil de coupe peut être prédéfini.

3. Outil de coupe selon l'une quelconque des revendications précédentes,
**caractérisé en ce que** la plaquette de coupe (14) est réalisée avec une courbure convexe allant de sa face de fond (16) dans la direction d'une ligne de limitation (18) jusqu'à la pointe (12), **en ce que** l'allure oblique de l'arête de coupe (10) est réalisée sous forme rectiligne dans un plan et **en ce que** la plaquette de coupe (14) présente, sous l'arête de coupe (10), dans la direction de sa face de fond (16) sur une section prédéfinissable, une partie de paroi (20) de courbure convexe, suivant la courbure de laquelle l'arête de coupe (10) s'étendant dans un autre plan.

4. Outil de coupe selon la revendication 3,
**caractérisé en ce que** la plaquette de coupe (14) présente une ouverture d'engagement (24) pour l'engagement d'un moyen de fixation (26) et **en ce que** l'arête de coupe (10) se prolonge en formant un angle d'enlèvement de copeaux (β) dans une face d'enlèvement de copeaux (32) qui se termine avec une allure de surface concave dans l'ouverture d'engagement (24).

5. Outil de coupe selon la revendication 3 ou 4,
**caractérisé en ce que** vers la pointe (12) de la plaquette de coupe (14), une autre arête de coupe (10) de géométrie comparable se raccorde à l'arête de coupe (10) adjacente, et **en ce que** les deux arêtes de coupe adjacentes (10) forment entre elles un angle d'arête de coupe prédéfinissable (b).

6. Outil de coupe selon la revendication 5,
**caractérisé en ce que** l'angle d'arête de coupe prédéfinissable (b) entre les arêtes de coupe adjacentes (10) est compris entre 80° et 100°, notamment vaut environ 90°.

7. Outil de coupe selon la revendication 5,
**caractérisé en ce que** l'angle d'arête de coupe prédéfinissable (b) correspond à l'angle d'application (b) et à l'angle de support (g).

8. Outil de coupe selon l'une quelconque des revendications précédentes,
**caractérisé en ce que** l'arête de coupe (10), partant de la pointe (12), se termine par un creux (34) de la plaquette de coupe (14), auquel se raccorde une arête de coupe adjacente (10), qui limite transversalement à la direction du creux, avec l'arête de coupe adjacente (10), un angle de creux obtus (c).

9. Outil de coupe selon la revendication 8,
**caractérisé en ce que** la valeur de l'angle de creux obtus (c) est comprise entre 130° et 150°, notamment vaut environ 140°.

10. Outil de coupe selon l'une quelconque des revendications précédentes,
**caractérisé en ce que** l'arête de coupe (10) respective montant obliquement dans l'autre plan forme par rapport à la face de fond (16) de la plaquette de coupe (14) un angle de montée (a) compris entre 10° et 40°, notamment d'environ 20°.

11. Outil de coupe selon l'une quelconque des revendications précédentes,
**caractérisé en ce que** la plaquette de coupe (14) est réalisée à la manière d'une plaquette de coupe réversible, avec trois pointes avant (12) et dans l'ensemble six arêtes de coupe (10).

12. Outil de coupe selon l'une quelconque des revendications précédentes,
**caractérisé en ce que** la pointe respective (12) est arrondie au moins aux endroits de la transition d'arêtes de coupe (10) adjacentes.

13. Support pour un outil de coupe pour l'usinage par enlèvement de copeaux de pièces à usiner, comprenant un siège (30) pour recevoir une plaquette de coupe (14), la plaquette de coupe (14) présentant au moins une arête de coupe (10) qui s'étend obliquement par rapport à une face de fond (16) de la plaquette de coupe (14) et le long d'une face de recouvrement (15) opposée à la face de fond (16) et qui se termine par une pointe (12) de la plaquette de cape (14), et la plaquette de coupe (14) présentant, au niveau d'un côté (20) opposé à l'arête de coupe (10), entre la face de fond (16) et la face de recouvrement (15), deux faces d'application (20a, 20b) s'étendant suivant un angle d'application (b) l'une par rapport à l'autre, auxquelles se raccorde une face de paroi (20) respective, qui s'étend suivant un angle extérieur (d) par rapport à la face d'application adjacente (20a, 20b), l'angle extérieur (d) étant supérieur à l'angle d'application (b),
- le siège (30) dans le support (28) présentant une face de support de fond (44) pour supporter la face de fond (16) de la plaquette de coupe (14) et deux faces de support (46, 48) s'étendant transversalement à la face de support de fond (44) et suivant un angle de support (g) pour supporter les faces d'application (20a, 20b) de la plaquette de coupe (14),
- l'angle d'application (b) correspondant à l'angle de support (g), et
- les faces de support (46, 48) supportant les faces d'application (20a, 20b) s'étendant l'une par rapport à l'autre suivant l'angle d'application (b),
**caractérisé en ce que** les faces de support (46, 48) sont réalisées et disposées de telle sorte que la force de coupe (K) agissant lors de l'utilisation de l'outil de coupe sur l'au moins une arête de coupe (10) s'étend essentiellement dans la direction de la ligne de coupe (52) des faces de support (46, 48), et **en ce que** la ligne de coupe (52) des faces de support (46, 48) est espacée d'un axe d'outil central (36) d'une distance qui est inférieure à la distance des autres parties des surfaces de support (46, 48) à l'axe d'outil central (36).
